# EUROPEAN PATENT APPLICATION

(11) **EP 4 404 613 A1**
(43) Date of publication of application: **24.07.2024**
(21) Application number: 22869254.7
(22) Date of filing: 14.09.2022
(51) Int. Cl.: H04W 24/02

(54) **PARAMETER SELECTION METHOD, PARAMETER CONFIGURATION METHOD, TERMINAL AND NETWORK SIDE DEVICE**

(30) Priority: 18.09.2021 CN 202111101832
(71) Applicant: Vivo Mobile Communication Co., Ltd., Dongguan, Guangdong 523863 (CN)
(72) Inventor: YANG, Ang, Dongguan, Guangdong 523863 (CN); SUN, Peng, Dongguan, Guangdong 523863 (CN)
(74) Representative: Lavoix
(86) International application number: PCT/CN2022/118707
(87) International publication number: WO 2023/040885

(57) **Abstract**

This application discloses a parameter selection method, a parameter configuration method, a terminal, and a network side device, and pertains to the field of communication technologies. The parameter selection method in embodiments of this application includes: A terminal determines a first condition that the terminal meets; and uses an artificial intelligence AI model parameter corresponding to the first condition.

## Description

### CROSS-REFERENCE TO RELATED APPLICATIONS

This application claims priority to Chinese Patent Application No. 202111101832.9 filed in China on September 18, 2021, which is incorporated herein by reference in its entirety.

### TECHNICAL FIELD

This application pertains to the field of communication technologies, and specifically relates to a parameter selection method, a parameter configuration method, a terminal, and a network side device.

### BACKGROUND

As communication technologies develop, artificial intelligence (Artificial Intelligence, AI) models are gradually becoming an indispensable part of a network architecture. The AI models are widely used in a plurality of fields. However, currently, terminals usually use a set of AI model parameters, to cope with all application environments and scenarios, resulting in poor flexibility in using the AI model parameters.

### SUMMARY

Embodiments of this application provide a parameter selection method, a parameter configuration method, a terminal, and a network side device, so that a problem in a related technology that flexibility of a terminal in using an AI model parameter is poor can be resolved.

According to a first aspect, a parameter selection method is provided. The method includes:
A terminal determines a first condition that the terminal meets; and
the terminal uses an artificial intelligence AI model parameter corresponding to the first condition.

According to a second aspect, a parameter configuration method is provided. The method includes:
A network side device sends first configuration information to a terminal, where
the first configuration information is for configuring AI model parameters in different conditions for the terminal.

According to a third aspect, a parameter selection apparatus is provided. The apparatus includes:
a determining module, configured to determine a first condition that a terminal meets; and
a parameter usage module, configured to use an AI model parameter corresponding to the first condition.

According to a fourth aspect, a parameter configuration apparatus is provided. The apparatus includes:
a first sending module, configured to send first configuration information to a terminal, where
the first configuration information is for configuring AI model parameters in different conditions for the terminal.

According to a fifth aspect, a terminal is provided. The terminal includes a processor, a memory, and a program or instructions that is/are stored in the memory and that may be run on the processor. When the program or the instructions is/are executed by the processor, steps of the method according to the first aspect are implemented.

According to a sixth aspect, a terminal is provided. The terminal includes a processor and a communication interface. The processor is configured to: determine a first condition that the terminal meets; and use an AI model parameter corresponding to the first condition.

According to a seventh aspect, a network side device is provided. The network side device includes a processor, a memory, and a program or instructions that is/are stored in the memory and that may be run on the processor. When the program or the instructions is/are executed by the processor, steps of the method according to the second aspect are implemented.

According to an eighth aspect, a network side device is provided. The network side device includes a processor and a communication interface. The communication interface is configured to send first configuration information to a terminal, where the first configuration information is for configuring AI model parameters in different conditions for the terminal.

According to a ninth aspect, a readable storage medium is provided. The readable storage medium stores a program or instructions. When the program or the instructions is/are executed by a processor, steps of the method according to the first aspect are implemented, or the steps of the method according to the second aspect are implemented.

According to a tenth aspect, a chip is provided. The chip includes a processor and a communication interface. The communication interface is coupled to the processor, and the processor is configured to run a program or instructions, to implement steps of the method according to the first aspect, or steps of the method according to the second aspect.

According to an eleventh aspect, a computer program/program product is provided. The computer program/program product is stored in a non-transient storage medium, and the program/program product is executed by at least one processor to implement steps of the method according to the first aspect, or steps of the method according to the second aspect.

In embodiments of this application, after the terminal determines the first condition that the terminal meets, the terminal may use the AI model parameter corresponding to the first condition. This may effectively improve flexibility of the terminal in using the AI model parameter, and improve system performance.

### BRIEF DESCRIPTION OF DRAWINGS

FIG. 1 is a block diagram of a wireless communication system to which embodiments of this application are applicable;
FIG. 2 is a schematic diagram of a neural network according to an embodiment of this application;
FIG. 3 is a schematic diagram of a neuron of a neural network according to an embodiment of this application;
FIG. 4 is a flowchart of a parameter selection method according to an embodiment of this application;
FIG. 5 is a flowchart of a parameter configuration method according to an embodiment of this application;
FIG. 6 is a schematic diagram of a structure of a parameter selection apparatus according to an embodiment of this application;
FIG. 7 is a schematic diagram of a structure of a parameter configuration apparatus according to an embodiment of this application;
FIG. 8 is a schematic diagram of a structure of a communication device according to an embodiment of this application;
FIG. 9 is a schematic diagram of a structure of a terminal according to an embodiment of this application; and
FIG. 10 is a schematic diagram of a structure of a network side device according to an embodiment of this application.

### DESCRIPTION OF EMBODIMENTS

The following clearly describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application shall fall within the protection scope of this application.

The terms "first", "second", and the like in this specification and the claims of this application are used to distinguish between similar objects instead of describing a specific order or sequence. It should be understood that, the terms used in such a way are interchangeable in proper circumstances, so that embodiments of this application can be implemented in an order other than those illustrated or described herein. Objects classified by "first" and "second" are usually of a same type, and the quantity of objects is not limited. For example, there may be one or more first objects. In addition, in this specification and the claims, "and/or" represents at least one of connected objects, and the character "/" generally represents an "or" relationship between associated objects.

It should be noted that the technologies described in embodiments of this application are not limited to a long term evolution (Long Term Evolution, LTE)/LTE-advanced (LTE-Advanced, LTE-A) system, and may also be used in other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application may be used interchangeably. The technologies described may be applied to both the systems and the radio technologies mentioned above as well as to other systems and radio technologies. The following descriptions describe a new radio (New Radio, NR) system for example purposes, and NR terms are used in most of the following descriptions. However, these technologies can also be applied to an application other than an NR system application, for example, a 6th generation (6^{th} Generation, 6G) communication system.

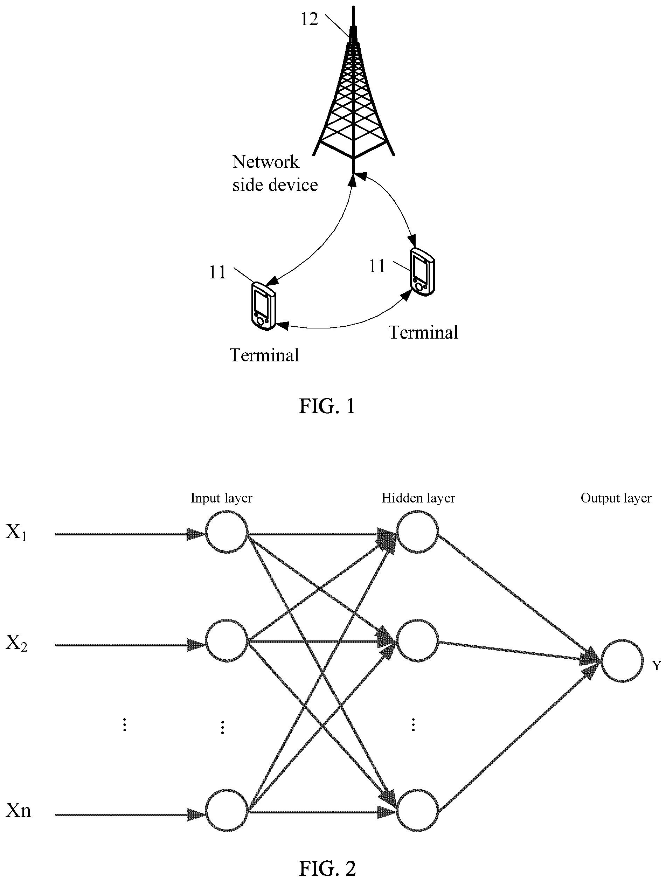

FIG. 1 is a block diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal side device, for example, a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), or a smart home device (a home device having a wireless communication function, for example, a refrigerator, a television, a washing machine, or furniture). The wearable device includes: a smart watch, a smart band, a smart headset, smart glasses, smart jewelry (a smart bangle, a smart bracelet, a smart ring, a smart necklace, a smart anklet bangle, a smart anklet bracelet, or the like), a smart wrist strap, smart clothing, a game machine, or the like. It should be noted that a specific type of the terminal 11 is not limited in embodiments of this application. The network side device 12 may be a base station or a core network device. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved NodeB, eNB), a home NodeB, a home evolved NodeB, a wireless local area network (Wireless Local Area Network, WLAN) access point, a wireless fidelity (Wireless Fidelity, WiFi) node, a transmission reception point (Transmitting Receiving Point, TRP), or another specific appropriate term in the art. Provided that the same technical effect is achieved, the base station is not limited to a specific technical term. It should be noted that in embodiments of this application, a base station in the NR system is merely used as an example, but does not limit a specific type of the base station.

Optionally, there may be a plurality of implementations for an AI model in embodiments of this application, for example, a neural network, a decision tree, a support vector machine, and a Bayes classifier. The following embodiments use the neural network as an example for description, but this does not limit a specific type of the AI model.

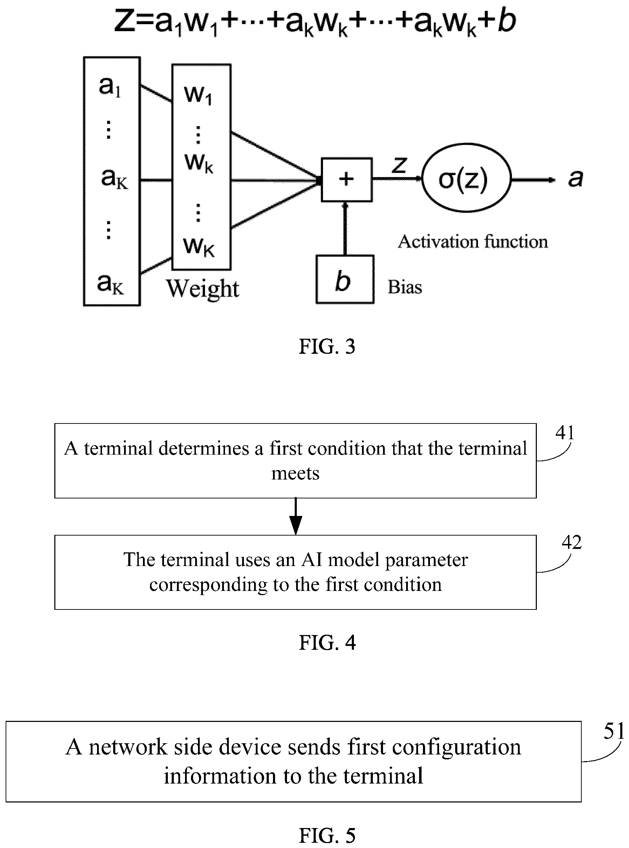

Optionally, the neural network in embodiments of this application may be as shown in FIG. 2, and includes an input layer, a hidden layer, and an output layer. Inputs of the input layer are Xi, X₂, ..., Xₙ, and a corresponding output of the output layer is Y. The neural network includes a neuron, and the neuron may be shown in FIG. 3. ai, a₂, ..., a_{K} are inputs of the neuron, w is a weight (or referred to as a multiplicative coefficient), b is a bias (or referred to as an additive coefficient), and σ(.) is an activation function. Common activation functions include a Sigmoid function, a hyperbolic tangent tanh function, a rectified linear unit (Rectified Linear Unit, ReLU, or referred to as a rectified linear unit), and the like.

In some embodiments, a parameter of the neural network is optimized by using an optimization algorithm. The optimization algorithm is an algorithm that minimizes or maximizes an objective function (or referred to as a loss function). The objective function is often a mathematical combination of a model parameter and data. For example, given model input data X and a corresponding label Y, a neural network model f(.) is constructed. After the model is constructed, a predicted output f(x) may be obtained based on the input data x, and a difference (f(x)-Y) between a predicted value and a real value may be calculated. This is the loss function. A purpose of neural network model training is to find an appropriate weight w and an appropriate bias b, so that a value of a corresponding loss function is minimized, and a smaller loss value indicates that the model is closer to a real case.

Optionally, optimization algorithms used for the neural network in embodiments of this application include but are not limited to: gradient descent (Gradient Descent), stochastic gradient descent (Stochastic Gradient Descent, SGD), mini-batch gradient descent (mini-batch gradient descent), momentum (Momentum), Nesterov (a name of the inventor, which specifically, is stochastic gradient descent with momentum), adaptive gradient descent (Adaptive Gradient descent, Adagrad), an optimization algorithm Adadelta, root mean square prop (root mean square prop, RMSprop), adaptive moment estimation (Adaptive Moment Estimation, Adam), and the like. During error back propagation, in these optimization algorithms, an error/loss is obtained based on the loss function, a gradient is obtained by calculating a derivative/partial derivative of a current neuron, and adding effect such as a learning rate and a previous gradient/derivative/partial derivative, and the gradient is transferred to an upper layer.

Optionally, the AI model parameter in embodiments of this application may also be referred to as an AI network parameter, an AI parameter, or the like. This is not limited.

With reference to the accompanying drawings, the following describes in detail a parameter selection method, a parameter configuration method, a terminal, and a network side device provided in embodiments of this application by using some embodiments and application scenarios thereof.

FIG. 4 is a flowchart of a parameter selection method according to an embodiment of this application. The method is performed by a terminal. As shown in FIG. 4, the method includes the following steps.

Step 41: The terminal determines a first condition that the terminal meets.

In this embodiment, the first condition may be related to a cell, an event, or the like. When the terminal meets the first condition, for example, the first condition is related to initial access, multi-cells, cell handover, a radio link failure (Radio Link Failure, RLF) event, a radio resource management (Radio Resource Management, RRM) event, and/or the like.

Step 42: The terminal uses an AI model parameter corresponding to the first condition.

It may be understood that after determining the first condition that the terminal meets, the terminal may use the AI model parameter corresponding to/matching the first condition.

According to the parameter selection method in this embodiment of this application, after determining the first condition that the terminal meets, the terminal may use the AI model parameter corresponding to the first condition. This may effectively improve flexibility of the terminal in using the AI model parameter, and improve system performance.

In this embodiment of this application, after determining that the terminal meets the first condition, the terminal may determine and use the AI model parameter corresponding to the first condition in different configuration manners. The manners are separately described as follows:

### Manner 1

In Manner 1, a network side device may configure AI model parameters in different conditions for the terminal, to automatically use a corresponding AI model parameter when the terminal triggers a specific event/meets a specific condition/accesses a specific cell/is switched to a specific cell.

Optionally, the terminal may receive first configuration information from the network side device, where the first configuration information is for configuring the AI model parameters in different conditions for the terminal. Then, the terminal may use, based on the first configuration information, the AI model parameter corresponding to the first condition. In this way, the AI model parameter corresponding to the first condition may be accurately determined and used by using the configuration of the network side device.

Optionally, the terminal may receive the first configuration information from the network side device by using at least one of the following: radio resource control (Radio Resource Control, RRC) signaling, a medium access control (Medium Access Control, MAC) control element (Control Element, CE), and downlink control information (Downlink Control Information, DCI).

Optionally, when configuring the AI model parameters in different conditions for the terminal, the network side device may indicate a correspondence between the AI model parameter and the condition/event/cell by using the first configuration information. The first configuration information may include at least one of the following:
the correspondence between the AI model parameter and the condition;
the correspondence between the AI model parameter and the event; and
the correspondence between the AI model parameter and the cell.

In some embodiments, a set of AI model parameters may correspond to one or more conditions.

In some embodiments, one condition may correspond to one or more sets of AI model parameters.

In some embodiments, a set of AI model parameters may correspond to one or more cells.

In some embodiments, one cell may correspond to one or more sets of AI model parameters.

In Manner 1, when the network side device configures the AI model parameters in different conditions for the terminal, there may be a plurality of cases. The cases are separately described as follows:
Case 1: The AI model parameter may be used when the network side device indicates/configures/activates each condition.

Optionally, in Case 1, the first configuration information is for indicating, configuring, or activating the AI model parameter corresponding to each condition, so that after determining the first condition that the terminal meets, the terminal directly determines and uses the AI model parameter corresponding to the first condition.

Optionally, in Case 1, each condition has and corresponds to only one set of AI model parameters.

In some embodiments, the network side device may indicate/configure/activate an AI model parameter used by UE in a current cell and/or another cell. For example, a base station configures the UE to use an AI model parameter 1 when the UE is in a cell A, and to use an AI model parameter 2 when the UE is in a cell B and a cell C. If the UE is currently in the cell A, the UE uses the AI model parameter 1.

Case 2: An AI model parameter set (or referred to as an AI model parameter list, an AI model parameter candidate set, or the like) may be used when the network side device indicates/configures/activates each condition, and the network side device specifically indicates a set of AI model parameters for the terminal.

Optionally, in Case 2, the first configuration information is for indicating, configuring, or activating the AI model parameter set corresponding to each condition. Further, the terminal may receive first indication information from the network side device, and use, based on the first configuration information and the first indication information, the AI model parameter corresponding to the first condition. The first indication information is for indicating the AI model parameter, in the AI model parameter set, that corresponds to the first condition, so that the terminal determines and uses the AI model parameter, from the AI model parameter set, that corresponds to the first condition.

In some embodiments, the network side device may configure or activate some AI model parameter lists, where the lists are used as candidate AI parameter sets of the terminal; and then specifically indicate a set of AI model parameters in the AI model parameter lists.

In some embodiments, the network side device may indicate/configure/activate an AI model parameter set used by UE in a current cell and/or another cell. For example, a base station configures the UE to use an AI model parameter 1 and an AI model parameter 2 that are included in the AI model parameter set when the UE is in a cell A, and to use an AI model parameter 3 and an AI model parameter 4 that are included in the shared AI model parameter set when the UE is in a cell B and a cell C. If the UE is currently in the cell A, and the base station specifically indicates the AI model parameter 1, the UE uses the AI model parameter 1.

In some embodiments, the network side device may indicate/configure/activate the AI model parameter set by using RRC signaling and/or a MAC CE, and specifically indicate a set of AI model parameters by using DCI and/or the MAC CE.

In some embodiments, the network side device may configure an AI parameter set 1, activate an AI parameter set 2 from the AI parameter set 1, and then specifically indicate a set of AI model parameters 3 from the AI parameter set 2. The AI parameter set 2 is a subset of the AI parameter set 1, and the AI model parameter 3 belongs to the AI model parameter set .

Case 3: An AI model parameter set may be used when the network side device indicates/configures/activates each condition, but the network side device does not specifically indicate a specific set of AI model parameters. Instead, the network side device indicates the terminal to use an AI model parameter that is used by default/initially activated/preferentially used when the condition (for example, a current event/condition, another event/condition, a current cell, or another cell) is met.

Optionally, in Case 3, the first configuration information is for indicating, configuring, or activating the AI model parameter set corresponding to each condition. Further, the terminal may receive first indication information from the network side device, and use, based on the first configuration information and the first indication information, the AI model parameter corresponding to the first condition. The first indication information is for indicating the terminal to use at least one of the following when the condition is met: an AI model parameter used by default, an initially activated AI model parameter, and a preferentially used AI model parameter, so that after determining that the terminal meets the first condition, the terminal uses the AI model parameter that is used by default/initially activated/preferentially used in the AI model parameter set as the AI model parameter corresponding to the first condition.

For example, a base station configures the UE to use an AI model parameter 1 and an AI model parameter 2 that are included in the AI model parameter set when the UE is in a cell A. When the base station does not specifically indicate a specific set of AI model parameters, the base station indicates to use the AI model parameter 1 by default/preferentially use the AI model parameter 1.

Case 4: An AI model parameter set may be used when the network side device indicates/configures/activates each condition, but the network side device does not specifically indicate a specific set of AI model parameters. However, in a protocol agreement, the terminal uses an AI model parameter that is used by default/initially activated/preferentially used when the condition (for example, a current event/condition, another event/condition, a current cell, or another cell) is met.

Optionally, in Case 4, the first configuration information is for indicating, configuring, or activating the AI model parameter set corresponding to each condition. Further, the terminal may use, based on the first configuration information and the protocol agreement, the AI model parameter corresponding to the first condition. The protocol agreement is that the terminal uses at least one of the following when the condition is met: an AI model parameter used by default, an initially activated AI model parameter, and a preferentially used AI model parameter. In this way, after determining the first condition that the terminal meets, the terminal may use, based on the protocol agreement, the AI model parameter that is used by default/initially activated/preferentially used in the AI model parameter set as the AI model parameter corresponding to the first condition.

Optionally, any one of the AI model parameter used by default, the initially activated AI model parameter, and the preferentially used AI model parameter may include at least one of the following:
an AI model parameter with a minimum identifier, for example, an AI model parameter, with a minimum AI model parameter identifier, that is used by default/initially activated/preferentially used, where the identifier may optionally be an index or the like;
an AI model parameter with a maximum identifier, for example, an AI model parameter, with a maximum AI model parameter identifier, that is used by default/initially activated/preferentially used, where the identifier may optionally be an index or the like;
an AI model parameter with a maximum data amount, for example, an AI model parameter, with a maximum data amount, that is used by default/initially activated/preferentially used;
an AI model parameter with a minimum data amount, for example, an AI model parameter, with a minimum data amount, that is used by default/initially activated/preferentially used;
an AI model parameter with a most complex model structure, for example, an AI model parameter, with a most complex model structure, that is used by default/initially activated/preferentially used;
an AI model parameter with a simplest model structure, for example, an AI model parameter, with a simplest model structure, that is used by default/initially activated/preferentially used;
an AI model parameter with a largest quantity of model layers, for example, an AI model parameter, with a largest quantity of model layers, that is used by default/initially activated/preferentially used;
an AI model parameter with a smallest quantity of model layers, for example, an AI model parameter, with a smallest quantity of model layers, that is used by default/initially activated/preferentially used;
an AI model parameter with a highest quantization level, for example, an AI model parameter, with a highest quantization level, that is used by default/initially activated/preferentially used;
an AI model parameter with a lowest quantization level, for example, an AI model parameter, with a lowest quantization level, that is used by default/initially activated/preferentially used;
an AI model parameter with a fully-connected neural network structure, for example, an AI model parameter, with a fully-connected neural network structure, that is used by default/initially activated/preferentially used; and
an AI model parameter with a convolutional neural network structure, for example, an AI model parameter, with a convolutional neural network structure, that is used by default/initially activated/preferentially used.

### Manner 2

In Manner 2, a network side device does not configure AI model parameters in different conditions for the terminal. When the terminal meets/enters a corresponding event/condition/cell (for example, a current event/condition, another event/condition, a current cell, or another cell), the terminal may use by default/initially activate/preferentially use the AI model parameter of the terminal, or does not limit the used AI model parameter, or use any AI model parameter, or use by default/initially activate/preferentially use a common AI model parameter.

Optionally, the terminal may use, according to a first preset rule, the AI model parameter corresponding to the first condition, where the first preset rule may include at least one of the following:
the AI model parameter of the terminal is used by default, initially activated, or preferentially used in each condition;
the terminal uses any AI model parameter; and
a common AI model parameter is used by default, initially activated, or preferentially used in each condition.

In some embodiments, for using by default/initially activating/preferentially using the AI model parameter of the terminal, or not limiting the used AI model parameter, a corresponding prerequisite may optionally be at least one of the following: The network side device does not configure an AI model parameter set, the network side device does not indicate an AI model parameter, and the network side device configures an AI model parameter set but does not specifically indicate a specific set of AI model parameters.

In some embodiments, for using by default/initially activating/preferentially using the common AI model parameter, a corresponding prerequisite may optionally be at least one of the following: The network side device does not configure an AI model parameter set, the network side device does not indicate an AI model parameter, and the network side device configures an AI model parameter set but does not specifically indicate a specific set of AI model parameters.

In some embodiments, the common AI model parameter may be an AI parameter used by all cells or all UEs.

In some embodiments, the common AI model parameter may be protocol-specified or indicated by the network side device.

In some embodiments, there may be a plurality of sets of common AI model parameters. For the plurality of sets of common AI model parameters, the terminal may select one set of common AI model parameters for use based on a requirement of the terminal. Alternatively, the network side device may indicate one set of common AI model parameters for use by the terminal. For example, when the network side device indicates one set of common AI model parameters, an identifier of the common AI model parameter may be carried in at least one of the following: system information block (System Information Block, SIB) information, master information block (Master Information Block, MIB) information, and random access information.

In this embodiment of this application, when the terminal meets a corresponding event/condition/cell (for example, a current event/condition, another event/condition, a current cell, or another cell), the terminal may use by default/initially activate/preferentially use a non-AI model parameter. For example, the UE may use an AI model parameter 1 and an AI model parameter 2 in a cell A. When the network side device does not specifically indicate a specific set of AI model parameters, the network side device indicates to use by default/preferentially use the non-AI model parameter.

Optionally, the terminal may use, according to a second preset rule, the AI model parameter corresponding to the first condition, where the second preset rule includes: A non-AI model parameter is used by default, initially activated, or preferentially used in each condition.

In some embodiments, for using by default, initially activating, or preferentially using the non-AI model parameter, a corresponding prerequisite may optionally be at least one of the following: The network side device does not configure an AI model parameter set, the network side device does not indicate an AI model parameter, and the network side device configures an AI model parameter set but does not specifically indicate a specific set of AI model parameters.

In this embodiment of this application, when the AI model parameter is updated, the network side device may send an updated AI model parameter to the terminal, so that the terminal uses the updated AI model parameter.

Optionally, the terminal may receive second configuration information from the network side device, where the second configuration information includes the updated AI model parameter, to use the updated AI model parameter.

In some embodiments, when the terminal performs cell access,cell handover, or another event/condition that requires RRC reconfiguration, the network side device sends the second configuration information to the terminal, where the second configuration information includes the updated AI model parameter, so that the terminal uses the updated AI model parameter.

In some embodiments, when the UE performs cell access, RRC configuration information sent by the base station to the UE includes the updated AI model parameter.

In some embodiments, when the UE performscell handover, RRC reconfiguration information sent by the base station to the UE includes the updated AI model parameter.

Optionally, a cell identifier (Identifier, ID) related to this embodiment of this application may include at least one of the following: a physical cell ID, a serving cell ID, a TRP ID, a tracking area (Tracking Area) ID, a cell group ID, a cell-associated reference signal (Reference Signal, RS) identifier (for example, a synchronization signal and PBCH block (Synchronization Signal and PBCH block, SSB index is associated with a cell, and a specific SSB index represents a specific cell), and the like.

Optionally, the first condition may include at least one of the following:
(1) Initial access: For example, that the terminal initially accesses a cell is a condition.
(2) Multi-cells: For example, that the terminal is in multiple cells is a condition.
(3)cell handover: For example, that the terminal triggers/occurscell handover is a condition.
(4) A condition determined based on a cell ID: For example, different cell IDs correspond to different conditions.
(5) A condition determined based on a location area: For example, different location areas correspond to different conditions.
(6) A condition determined based on at least one of the following: a signal-to-noise ratio (Signal-to-Noise Ratio, SNR), a reference signal received power (Reference Signal Receiving Power, RSRP), a signal-to-interference-plus-noise ratio (Signal to Interference plus Noise Ratio, SINR), a reference signal received quality (Reference Signal Received Quality, RSRQ), a layer 1 SNR, a layer 1 RSRP, a layer 1 SINR, and a layer 1 RSRQ. This type may be collectively referred to as channel quality. For example, different SNR intervals (for example, a high SNR interval, a low SNR interval, and a medium SNR interval) correspond to different conditions. For another example, different RSRPs/SINRs/RSRQs correspond to different conditions.
(7) A condition determined based on a bandwidth part (Bandwidth Part, BWP): For example, BWP access or BWP switching occurs on the terminal is a condition.
(8) A condition determined based on a tracking area (Tracking Area, TA) and/or a radio access network (Radio Access Network, RAN) notification area (RAN-based Notification Area, RNA): For example, that a TA is changed is a condition. Different TAs correspond to different conditions. For example, a specific TA area corresponds to a specific condition.
(9) A condition determined based on an operating frequency: For example, that an operating frequency is changed is a condition. Different operating frequencies correspond to different conditions. For example, a specific operating frequency corresponds to a specific condition.
(10) A condition determined based on a public land mobile network (Public Land Mobile Network, PLMN): For example, different PLMNs correspond to different conditions.
(11) A condition determined based on a state of the terminal: For example, that the terminal is in a connected state or an idle state is a condition.
(12) A condition determined based on a quality of service flow (Quality of Service Flow, QoS Flow) and a combination thereof: For example, different QoS flows correspond to different conditions. For another example, a plurality of QoS flows are established at the same time, and different QoS flow combinations correspond to different conditions.
(13) A condition determined based on an RLF event: For example, that the RLF event does not occur is a condition, and the RLF event occurs is a condition.
(14) A condition determined based on an RRM event: The RRM event may include A1 to A6 events, and different RRM events correspond to different conditions. For example, that the RRM event does not occur is a condition, and the RRM event occurs is a condition.
(15) A condition determined based on a beam failure (Beam Failure, BF) event and/or a beam failure recovery (Beam Failure Recovery, BFR) event: For example, that the BF event does not occur is a condition, beam failure detection occurs is a condition, a new beam indication occurs is a condition, and beam failure recovery occurs is a condition.
(16) A condition determined based on a timing measurement result and/or a timing advance (Timing Advance, TA) measurement result: For example, different timing advance intervals correspond to different conditions.
(17) A condition determined based on a round-trip time (Round-Trip Time, RTT) measurement result: For example, different RTT intervals correspond to different conditions.
(18) A condition determined based on an observed time difference of arrival (Observed Time Difference of Arrival, OTDOA) measurement result. For example, different OTDOA intervals correspond to different conditions.

In this embodiment of this application, the AI model parameter may include but is not limited to at least one of the following:

### (1) Structure information of an AI model.

The AI model uses a neural network as an example, and the structure information of the AI model may include but is not limited to at least one of the following:
(a) a form of the neural network: for example, a fully-connected neural network, a convolutional neural network, a cyclic neural network, or a residual network;
(b) a combination manner of a plurality of small networks, for example, a combination of a fully-connected neural network and a convolutional neural network, or a combination of a convolutional neural network and a residual network;
(c) a quantity of hidden layers in the neural network;
(d) a connection manner of an input layer and a hidden layer, a connection manner of a plurality of hidden layers, and/or a connection manner of a hidden layer and an output layer;
(e) a quantity of neurons at each layer in the neural network; and
(f) a special structure in the neural network, where for example, the special structure includes a batch normalization (Batch normalization) structure, a residual structure, a memory structure, and an attention structure, which are not listed herein one by one. For example, the structure information includes information such as a location and/or a parameter of the special structure.

### (2) Parameter of each neuron in the AI model.

Optionally, the parameter of each neuron includes but is not limited to at least one of the following: a multiplicative coefficient w (weight), an additive coefficient (bias), and an activation function.

In this embodiment of this application, the AI model corresponding to the AI model parameter may be used for at least one of the following:
(a) Signal processing, including but not limited to signal detection, filtering, equalization, and the like.
   In some embodiments, a signal to be processed in (a) may optionally be at least one of the following: a demodulation reference signal (Demodulation Reference Signal, DMRS), a sounding reference signal (Sounding Reference Signal, SRS), a synchronization signal block SSB, a tracking reference signal (Tracking Reference Signal, TRS), a phase-tracking reference signal (Phase-Tracking Reference Signal, PTRS), a channel state information reference signal (Channel State Information Reference Signal, CSI-RS), and the like.
(b) Signal transmission, including signal receiving/sending.
   In some embodiments, a channel corresponding to the signal transmission in (b) may optionally be at least one of the following: a physical downlink control channel (Physical Downlink Control Channel, PDCCH), a physical downlink shared channel (Physical Downlink Shared Channel, PDSCH), a physical uplink control channel (Physical Uplink Control Channel, PUCCH), a physical uplink shared channel (Physical Uplink Shared Channel, PUSCH), a physical random access channel (Physical Random Access Channel, PRACH), a physical broadcast channel (Physical Broadcast Channel, PBCH), and the like.
(c) Signal demodulation.
(d) Obtaining of channel state information (Channel State Information, CSI).
   Optionally, obtaining of the CSI may include: (1) a CSI feedback, including channel related information, channel matrix related information, channel characteristic information, channel matrix characteristic information, a precoding matrix indicator (Precoding Matrix Indicator, PMI), a rank indication (Rank Indication, RI), a CSI-RS resource indicator (CSI-RS Resource Indicator, CRI), a channel quality indication (Channel Quality Indication, CQI), a layer indicator (Layer Indicator, LI), and the like; and (2) frequency division duplex (Frequency Division Duplexing, FDD) uplink/downlink partial reciprocity. For an FDD system, according to partial reciprocity, a base station obtains angle information and delay information based on an uplink channel, and may notify UE of the angle information and the delay information by using a CSI-RS precoding or direct indication method, and the UE performs reporting according to an indication of the base station or performs selection and reporting within a range indicated by the base station, to reduce a calculation amount of the UE and CSI reporting overheads.
(e) Beam management, including but not limited to beam measurement, beam reporting, beam prediction, beam failure detection, beam failure recovery, a new beam indication in beam failure recovery, and the like.
(f) Channel prediction, including but not limited to channel state information prediction, beam prediction, and the like.
(g) Interference suppression, including but not limited to intra-cell interference, inter-cell interference, out-of-band interference, cross modulation interference, and the like.
(h) Positioning, where positioning may be used to estimate a specific location (which includes horizontal and/or vertical locations), a possible future track, auxiliary location estimation or track estimation information, or the like of the UE by using a reference signal (for example, an SRS).
(i) Prediction of a higher layer service and a higher layer parameter, including but not limited to prediction of a throughput, a required packet size, a service requirement, a moving speed, noise information, and the like.
(j) Management of the higher layer service and the higher layer parameter, including but not limited to management of a throughput, a required packet size, a service requirement, a moving speed, noise information, and the like.
(k) Parsing of control signaling, for example, parsing performed on related signaling of power control and/or related signaling of beam management.

FIG. 5 is a flowchart of a parameter configuration method according to an embodiment of this application. The method is performed by a network side device. As shown in FIG. 5, the method includes the following step.

Step 51: The network side device sends first configuration information to a terminal.

In this embodiment, the first configuration information is for configuring AI model parameters in different conditions for the terminal.

According to the parameter configuration method in this embodiment of this application, the first configuration information is sent, and the AI model parameters in different conditions may be configured for the terminal, so that after determining a first condition that the terminal meets, the terminal uses an AI model parameter corresponding to the first condition, to effectively improve flexibility of using the AI model parameter by the terminal and improve system performance.

Optionally, in different configuration manners, the first configuration information is for indicating, configuring, or activating an AI model parameter corresponding to each condition, or the first configuration information is for indicating, configuring, or activating an AI model parameter set corresponding to each condition, so that the terminal may determine and use, based on the first configuration information, the AI model parameter corresponding to the first condition.

Optionally, the network side device may send the first configuration information to the terminal by using at least one of the following: RRC signaling, a MAC CE, and DCI.

Optionally, when the first configuration information is for indicating, configuring, or activating the AI model parameter set corresponding to each condition, the network side device may further send first indication information to the terminal, where the first indication information is for indicating an AI model parameter, in the AI model parameter set, that corresponds to a current condition of the terminal, so that the terminal determines and uses the AI model parameter, from the AI model parameter set, that corresponds to the first condition; or the first indication information is for indicating the terminal to use at least one of the following when the condition is met: an AI model parameter used by default, an initially activated AI model parameter, and a preferentially used AI model parameter, so that after determining that the terminal meets the first condition, the terminal uses the AI model parameter used by default/initially activated/preferentially used in the AI model parameter set as the AI model parameter corresponding to the first condition.

It should be noted that for the AI model parameter used by default, the initially activated AI model parameter, or the preferentially used AI model parameter, refer to the foregoing embodiment. Details are not described herein again.

In this embodiment of this application, when the AI model parameter is updated, the network side device may send an updated AI model parameter to the terminal, so that the terminal uses the updated AI model parameter. The network side device may send second configuration information to the terminal, where the second configuration information includes the updated AI model parameter, so that the terminal uses the updated AI model parameter.

In some embodiments, when the terminal performs cell access,cell handover, or another event/condition that requires RRC reconfiguration, the network side device sends the second configuration information to the terminal, where the second configuration information includes the updated AI model parameter, so that the terminal uses the updated AI model parameter.

In some embodiments, when the UE performs cell access, RRC configuration information sent by the base station to the UE includes the updated AI model parameter.

In some embodiments, when the UE performscell handover, RRC reconfiguration information sent by the base station to the UE includes the updated AI model parameter.

It should be noted that an execution subject of the parameter selection method provided in embodiments of this application may be a parameter selection apparatus, or a control module in the parameter selection apparatus for performing the parameter selection method. In embodiments of this application, the parameter selection apparatus provided in embodiments of this application is described by using an example in which the parameter selection apparatus performs the parameter selection method.

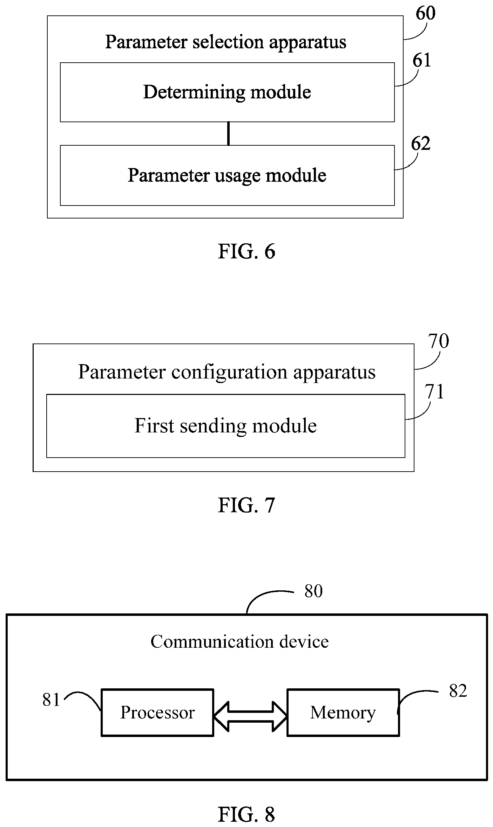

FIG. 6 is a schematic diagram of a structure of a parameter selection apparatus according to an embodiment of this application. The apparatus is used in a terminal. As shown in FIG. 6, the parameter selection apparatus 60 includes:
a determining module 61, configured to determine a first condition that the terminal meets; and
a parameter usage module 62, configured to use an AI model parameter corresponding to the first condition.

In this embodiment of this application, after the terminal determines the first condition that the terminal meets, the terminal may use the AI model parameter corresponding to the first condition. This may effectively improve flexibility of the terminal in using the AI model parameter, and improve system performance.

Optionally, the parameter selection apparatus 60 further includes:
a first receiving module, configured to receive first configuration information from a network side device, where the first configuration information is for configuring AI model parameters in different conditions for the terminal, where
the parameter usage module 62 is further configured to use, based on the first configuration information, the AI model parameter corresponding to the first condition.

Optionally, the first configuration information is for indicating, configuring, or activating an AI model parameter corresponding to each condition.

Optionally, the first configuration information includes at least one of the following:
a correspondence between the AI model parameter and the condition;
a correspondence between the AI model parameter and an event; and
a correspondence between the AI model parameter and a cell.

Optionally, the first configuration information is for indicating, configuring, or activating an AI model parameter set corresponding to each condition.

Optionally, the first receiving module is further configured to receive first indication information from the network side device; and
the parameter usage module 62 is further configured to use, based on the first configuration information and the first indication information, the AI model parameter corresponding to the first condition, where
the first indication information is for indicating the AI model parameter, in the AI model parameter set, that corresponds to the first condition; or the first indication information is for indicating the terminal to use at least one of the following when the condition is met: an AI model parameter used by default, an initially activated AI model parameter, and a preferentially used AI model parameter.

Optionally, the parameter usage module 62 is further configured to use, based on the first configuration information and a protocol agreement, the AI model parameter corresponding to the first condition, where the protocol agreement is that the terminal uses at least one of the following when the condition is met: an AI model parameter used by default, an initially activated AI model parameter, and a preferentially used AI model parameter.

Optionally, any one of the AI model parameter used by default, the initially activated AI model parameter, and the preferentially used AI model parameter includes at least one of the following:
an AI model parameter with a minimum identifier;
an AI model parameter with a maximum identifier;
an AI model parameter with a maximum data amount;
an AI model parameter with a minimum data amount;
an AI model parameter with a most complex model structure;
an AI model parameter with a simplest model structure;
an AI model parameter with a largest quantity of model layers;
an AI model parameter with a smallest quantity of model layers;
an AI model parameter with a highest quantization level;
an AI model parameter with a lowest quantization level;
an AI model parameter with a fully-connected neural network structure; and
an AI model parameter with a convolutional neural network structure.

Optionally, the parameter usage module 62 is further configured to use, according to a first preset rule, the AI model parameter corresponding to the first condition, where
the first preset rule includes at least one of the following:
the AI model parameter of the terminal is used by default, initially activated, or preferentially used in each condition;
the terminal uses any AI model parameter; and
a common AI model parameter is used by default, initially activated, or preferentially used in each condition.

Optionally, the parameter usage module 62 is further configured to skip using, according to a second preset rule, the AI model parameter corresponding to the first condition, where the second preset rule includes: A non-AI model parameter is used by default, initially activated, or preferentially used in each condition.

Optionally, the first receiving module is configured to receive the first configuration information from the network side device by using at least one of the following: RRC signaling, a MAC CE, and DCI.

Optionally, the parameter selection apparatus 60 further includes:
a second receiving module, configured to receive second configuration information from a network side device, where the second configuration information includes an updated AI model parameter.

Optionally, the first condition includes at least one of the following:
initial access;
multi-cells;
cell switching;
a condition determined based on a cell identifier;
a condition determined based on a location area;
a condition determined based on at least one of the following: a signal-to-noise ratio SNR, a reference signal received power RSRP, a signal-to-interference-plus-noise ratio SINR, a reference signal received quality RSRQ, a layer 1 SNR, a layer 1 RSRP, a layer 1 SINR, and a layer 1 RSRQ;
a condition determined based on a bandwidth part BWP;
a condition determined based on a tracking area TA and/or a radio access network notification area RNA;
a condition determined based on an operating frequency;
a condition determined based on a public land mobile network PLMN;
a condition determined based on a terminal state;
a condition determined based on a quality of service flow QoS flow;
a condition determined based on a radio link failure RLF event;
a condition determined based on a radio resource management RRM event;
a condition determined based on a beam failure BF event and/or a beam failure recovery BFR event;
a condition determined based on a timing measurement result and/or a timing advance measurement result;
a condition determined based on a round-trip time RTT measurement result; and
a condition determined based on an observed time difference of arrival OTDOA measurement result.

Optionally, the AI model parameter includes at least one of the following:
structure information of an AI model; and
a parameter of each neuron in the AI model.

Optionally, an AI model corresponding to the AI model parameter is used for at least one of the following:
signal processing;
signal transmission;
signal demodulation;
obtaining of channel state information;
beam management;
channel prediction;
interference suppression;
positioning;
prediction of a higher layer service and a higher layer parameter;
management of the higher layer service and the higher layer parameter; and
parsing of control signaling.

The parameter selection apparatus in this embodiment of this application may be an apparatus, or an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the foregoing listed terminal, and the non-mobile terminal may be a personal computer (Personal Computer, PC), a television (Television, TV), an automated teller machine, a self-service machine, or the like. This is not specifically limited in embodiments of this application.

The parameter selection apparatus provided in embodiments of this application can implement the processes implemented in the method embodiment shown in FIG. 4, and achieve same technical effect. To avoid repetition, details are not described herein again.

It should be noted that an execution subject of the parameter configuration method provided in embodiments of this application may be a parameter configuration apparatus, or a control module in the parameter configuration apparatus for performing the configuration method. In embodiments of this application, an example in which the parameter configuration apparatus performs the parameter configuration method is used to describe the parameter configuration apparatus provided in embodiments of this application.

FIG. 7 is a schematic diagram of a structure of a parameter configuration apparatus according to an embodiment of this application. The apparatus is used in a network side device. As shown in FIG. 7, the parameter configuration apparatus 70 includes:
a first sending module 71, configured to send first configuration information to a terminal, where
the first configuration information is for configuring AI model parameters in different conditions for the terminal. Optionally, in different configuration manners, the first configuration information is for indicating, configuring, or activating an AI model parameter corresponding to each condition, or the first configuration information is for indicating, configuring, or activating an AI model parameter set corresponding to each condition, so that the terminal may determine and use, based on the first configuration information, the AI model parameter corresponding to the first condition.

Optionally, the first sending module 71 is configured to send the first configuration information to the terminal by using at least one of the following: RRC signaling, a MAC CE, and DCI.

Optionally, when the first configuration information is for indicating, configuring, or activating the AI model parameter set corresponding to each condition, the first sending module 71 may be further configured to send first indication information to the terminal, where the first indication information is for indicating an AI model parameter, in the AI model parameter set, that corresponds to a current condition of the terminal, so that the terminal determines and uses the AI model parameter, from the AI model parameter set, that corresponds to the first condition; or the first indication information is for indicating the terminal to use at least one of the following when the condition is met: an AI model parameter used by default, an initially activated AI model parameter, and a preferentially used AI model parameter, so that after determining that the terminal meets the first condition, the terminal uses the AI model parameter used by default/initially activated/preferentially used in the AI model parameter set as the AI model parameter corresponding to the first condition.

Optionally, the parameter configuration apparatus 70 further includes:
a second sending module, configured to send second configuration information to the terminal, where the second configuration information includes an updated AI model parameter, so that the terminal uses the updated AI model parameter.

In some embodiments, when the terminal performs cell access,cell handover, or another event/condition that requires RRC reconfiguration, the network side device sends the second configuration information to the terminal, where the second configuration information includes the updated AI model parameter, so that the terminal uses the updated AI model parameter.

The parameter configuration apparatus provided in embodiments of this application can implement the processes implemented in the method embodiment shown in FIG. 5, and achieve same technical effect. To avoid repetition, details are not described herein again.

Optionally, as shown in FIG. 8, an embodiment of this application further provides a communication device 80. The communication device 80 includes a processor 81, a memory 82, and a program or instructions that is/are stored in the memory 82 and that may be run on the processor 81. For example, when the communication device 80 is a terminal, and the program or the instructions is/are executed by the processor 81, processes of the foregoing parameter selection method embodiments are implemented, and same technical effect can be achieved. When the communication device 80 is a network side device, and the program or the instructions is/are executed by the processor 81, processes of the foregoing parameter configuration method embodiments are implemented, and same technical effect can be achieved. To avoid repetition, details are not repeated herein.

An embodiment of this application further provides a terminal. The terminal includes a processor and a communication interface. The processor is configured to: determine a first condition that the terminal meets; and use an AI model parameter corresponding to the first condition. This terminal embodiment corresponds to the foregoing method embodiment on the terminal side. Implementation processes and implementations of the foregoing method embodiments are applicable to this terminal embodiment, and same technical effect can be achieved.

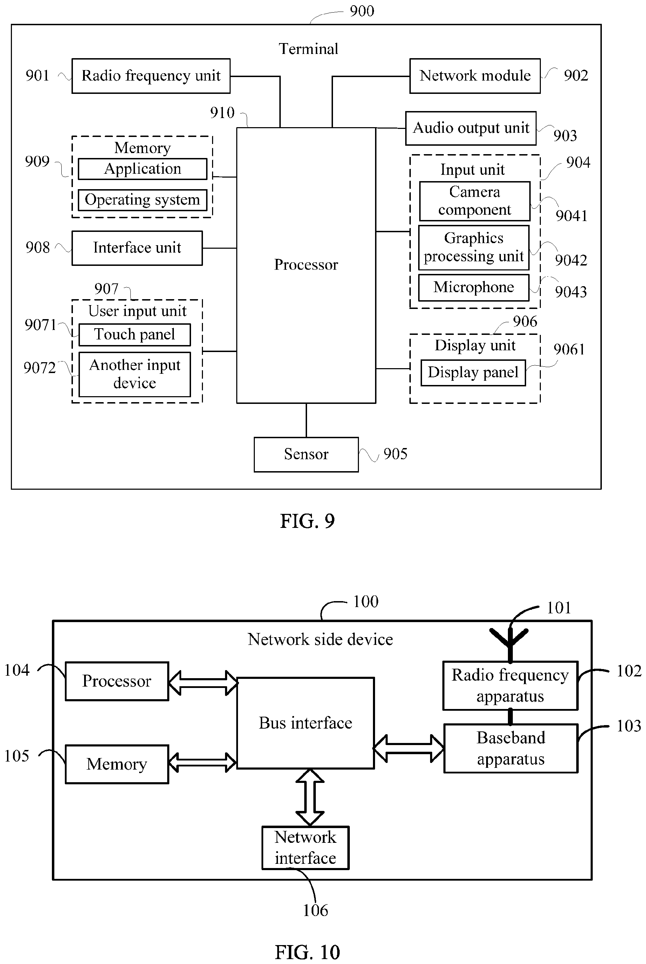

Specifically, FIG. 9 is a schematic diagram of a hardware structure of a terminal according to an embodiment of this application.

The terminal 900 includes but is not limited to at least a part of components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (such as a battery) that supplies power to each component. The power supply may be logically connected to the processor 910 by using a power supply management system, to implement functions such as charging and discharging management, and power consumption management by using the power supply management system. The structure of the terminal shown in FIG. 9 does not constitute a limitation on the terminal. The terminal may include more or fewer components than those shown in the figure, or combine some components, or have different component arrangements. Details are not described herein.

It should be understood that in this embodiment of this application, the input unit 904 may include a graphics processing unit (Graphics Processing Unit, GPU) 9041 and a microphone 9042. The graphics processing unit 9041 processes image data of a static picture or a video obtained by an image capture apparatus (for example, a camera) in a video capture mode or an image capture mode. The display unit 906 may include a display panel 9061. Optionally, the display panel 9061 may be configured in a form such as a liquid crystal display or an organic light-emitting diode. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In this embodiment of this application, the radio frequency unit 901 receives downlink data from a network side device and then sends the downlink data to the processor 910 for processing; and sends uplink data to the network side device. Usually, the radio frequency unit 901 includes but is not limited to an antenna, at least one amplifier, a transceiver, a coupler, a low noise amplifier, a duplexer, and the like.

The memory 909 may be configured to store a software program or instructions and various data. The memory 909 may mainly include a program or instruction storage area and a data storage area. The program or instruction storage area may store an operating system, an application or instructions required by at least one function (for example, a sound playing function or an image playing function), and the like. In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 910 may include one or more processing units. Optionally, an application processor and a modem processor may be integrated into the processor 910. The application processor mainly processes an operating system, a user interface, an application, instructions, or the like. The modem processor mainly processes wireless communication, for example, a baseband processor. It may be understood that, alternatively, the modem processor may not be integrated into the processor 910.

The processor 910 is configured to: determine a first condition that the terminal 900 meets, and use an AI model parameters corresponding to the first condition. This may effectively improve flexibility of the terminal in using the AI model parameter, and improve system performance.

Optionally, the processor 910 is configured to: determine the first condition that the terminal 900 meets; and use the AI model parameter corresponding to the first condition.

Optionally, the radio frequency unit 901 is configured to: receive first configuration information from the network side device, where the first configuration information is for configuring AI model parameters in different conditions for the terminal.

The processor 910 is further configured to use, based on the first configuration information, the AI model parameter corresponding to the first condition.

Optionally, the first configuration information is for indicating, configuring, or activating an AI model parameter corresponding to each condition.

Optionally, the first configuration information is for indicating, configuring, or activating an AI model parameter set corresponding to each condition.

Optionally, the radio frequency unit 901 is further configured to receive first indication information from the network side device, where the first indication information is for indicating the AI model parameter, in the AI model parameter set, that corresponds to the first condition in the; or the first indication information is for indicating the terminal 900 to use at least one of the following when the condition is met: an AI model parameter used by default, an initially activated AI model parameter, and a preferentially used AI model parameter.

The processor 910 is further configured to use, based on the first configuration information and the first indication information, the AI model parameter corresponding to the first condition.

Optionally, the processor 910 is further configured to use, based on the first configuration information and a protocol agreement, the AI model parameter corresponding to the first condition, where the protocol agreement is that the terminal uses at least one of the following when the condition is met: an AI model parameter used by default, an initially activated AI model parameter, and a preferentially used AI model parameter.

Optionally, the processor 910 is further configured to use, according to a first preset rule, the AI model parameter corresponding to the first condition, where
the first preset rule includes at least one of the following:
the AI model parameter of the terminal is used by default, initially activated, or preferentially used in each condition;
the terminal uses any AI model parameter; and
a common AI model parameter is used by default, initially activated, or preferentially used in each condition.

Optionally, the processor 910 is further configured to skip using, according to a second preset rule, the AI model parameter corresponding to the first condition, where the second preset rule includes: A non-AI model parameter is used by default, initially activated, or preferentially used in each condition.

The terminal 900 provided in this embodiment of this application can implement processes implemented in the method embodiment in FIG. 4, and achieve same technical effect. To avoid repetition, details are not described herein again.

An embodiment of this application further provides a network side device. The network side device includes a processor and a communication interface. The communication interface is configured to send first configuration information to a terminal, where the first configuration information is for configuring AI model parameters in different conditions for the terminal. This network side device embodiment corresponds to the foregoing method embodiment of the network side device. Implementation processes and implementations of the foregoing method embodiments are applicable to this network side device embodiments, and same technical effect can be achieved.

Specifically, an embodiment of this application further provides a network side device. As shown in FIG. 10, the network side device 100 includes an antenna 101, a radio frequency apparatus 102, and a baseband apparatus 103. The antenna 101 is connected to the radio frequency apparatus 102. In an uplink direction, the radio frequency apparatus 102 receives information through the antenna 101, and sends the received information to the baseband apparatus 103 for processing. In a downlink direction, the baseband apparatus 103 processes information that needs to be sent, and sends processed information to the radio frequency apparatus 102. The radio frequency apparatus 102 processes the received information, and sends processed information through the antenna 101.

The frequency band processing apparatus may be located in the baseband apparatus 103. The method performed by the network side device in the foregoing embodiments may be implemented in the baseband apparatus 103. The baseband apparatus 103 includes a processor 104 and a memory 105.

The baseband apparatus 103 may include, for example, at least one baseband board. A plurality of chips are disposed on the baseband board. As shown in FIG. 10, one chip is, for example, the processor 104, and is connected to the memory 105, to invoke a program in the memory 105, to perform operations of the network side device shown in the foregoing method embodiments.

The baseband apparatus 103 may further include a network interface 106, configured to exchange information with the radio frequency apparatus 102. The interface is, for example, a common public radio interface (Common Public Radio Interface, CPRI).

Specifically, the network side device in this embodiment of this application further includes: instructions or a program that are/is stored in the memory 105 and that may be run on the processor 104. The processor 104 invokes the instructions or the program in the memory 105 to perform the method performed by the modules shown in FIG. 7, and same technical effect is achieved. To avoid repetition, details are not described herein again.

An embodiment of this application further provides a readable storage medium. The readable storage medium stores a program or instructions. When the program or the instructions is/are executed by a processor, processes of the foregoing parameter selection method embodiment are implemented, or processes of the foregoing parameter configuration method embodiment are implemented, and same technical effect can be achieved. To avoid repetition, details are not described herein again.

The processor is a processor in the terminal in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application also provides a chip. The chip includes a processor and a communication interface. The communication interface is coupled to the processor. The processor is configured to run a program or instructions, to implement processes of the foregoing parameter selection method embodiment, or implement processes of the foregoing parameter configuration method embodiment, and same technical effect can be achieved. To avoid repetition, details are not described herein again.

It should be understood that the chip mentioned in this embodiment of this application may also be referred to as a system-level chip, a system chip, a chip system, or a system-on-a-chip chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements that are not expressly listed, or further includes elements inherent to this process, method, article, or apparatus. An element preceded by "includes a ..." does not, without more constraints, preclude the presence of additional identical elements in the process, method, article, or apparatus that includes the element. In addition, it should be noted that the scope of the method and the apparatus in embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network side device, or the like) to perform the methods described in embodiments of this application.

Embodiments of this application are described above with reference to the accompanying drawings. However, this application is not limited to the foregoing specific implementations. The foregoing specific implementations are merely examples, but are not limitative. Under the enlightenment of this application, a person of ordinary skill in the art may further make many forms without departing from the principles of this application and the protection scope of the claims, and all the forms fall within the protection of this application.

## Claims

1. A parameter selection method, comprising:
determining, by a terminal, a first condition that the terminal meets; and
using, by the terminal, an artificial intelligence AI model parameter corresponding to the first condition.

2. The method according to claim 1, wherein the method further comprises:
receiving, by the terminal, first configuration information from a network side device, wherein the first configuration information is for configuring AI model parameters in different conditions for the terminal; and
the using an AI model parameter corresponding to the first condition comprises:
using, by the terminal based on the first configuration information, the AI model parameter corresponding to the first condition.

3. The method according to claim 2, wherein the first configuration information is for indicating, configuring, or activating an AI model parameter corresponding to each condition.

4. The method according to claim 3, wherein the first configuration information comprises at least one of the following:
a correspondence between the AI model parameter and the condition;
a correspondence between the AI model parameter and an event; and
a correspondence between the AI model parameter and a cell.

5. The method according to claim 2, wherein the first configuration information is for indicating, configuring, or activating an AI model parameter set corresponding to each condition.

6. The method according to claim 5, wherein the using, based on the first configuration information, the AI model parameter corresponding to the first condition comprises:
receiving, by the terminal, first indication information from the network side device, and using, based on the first configuration information and the first indication information, the AI model parameter corresponding to the first condition, wherein
the first indication information is for indicating the AI model parameter, in the AI model parameter set, that corresponds to the first condition;
or
the first indication information is for indicating the terminal to use at least one of the following when the condition is met: an AI model parameter used by default, an initially activated AI model parameter, and a preferentially used AI model parameter.

7. The method according to claim 5, wherein the using, based on the first configuration information, the AI model parameter corresponding to the first condition comprises:
using, by the terminal based on the first configuration information and a protocol agreement, the AI model parameter corresponding to the first condition, wherein
the protocol agreement is that the terminal uses at least one of the following when the condition is met: an AI model parameter used by default, an initially activated AI model parameter, and a preferentially used AI model parameter.

8. The method according to claim 6 or 7, wherein any one of the AI model parameter used by default, the initially activated AI model parameter, and the preferentially used AI model parameter comprises at least one of the following:
an AI model parameter with a minimum identifier;
an AI model parameter with a maximum identifier;
an AI model parameter with a maximum data amount;
an AI model parameter with a minimum data amount;
an AI model parameter with a most complex model structure;
an AI model parameter with a simplest model structure;
an AI model parameter with a largest quantity of model layers;
an AI model parameter with a smallest quantity of model layers;
an AI model parameter with a highest quantization level;
an AI model parameter with a lowest quantization level;
an AI model parameter with a fully-connected neural network structure; and
an AI model parameter with a convolutional neural network structure.

9. The method according to claim 1, the using an AI model parameter corresponding to the first condition comprises:
using, by the terminal according to a first preset rule, the AI model parameter corresponding to the first condition, wherein
the first preset rule comprises at least one of the following:
the AI model parameter of the terminal is used by default, initially activated, or preferentially used in each condition;
the terminal uses any AI model parameter; and
a common AI model parameter is used by default, initially activated, or preferentially used in each condition.

10. The method according to claim 1, wherein the method further comprises:
skipping using, by the terminal according to a second preset rule, the AI model parameter corresponding to the first condition, wherein
the second preset rule comprises: a non-AI model parameter is used by default, initially activated, or preferentially used in each condition.

11. The method according to claim 2, wherein the receiving first configuration information from a network side device comprises:
receiving, by the terminal, the first configuration information from the network side device by using at least one of the following:
radio resource control RRC signaling, a medium access control control unit MAC CE, and downlink control information DCI.

12. The method according to claim 1, wherein the method further comprises:
receiving, by the terminal, second configuration information from a network side device, wherein
the second configuration information comprises an updated AI model parameter.

13. The method according to claim 1, wherein the first condition comprises at least one of the following:
initial access;
multi-cells;
cell switching;
a condition determined based on a cell identifier;
a condition determined based on a location area;
a condition determined based on at least one of the following: a signal-to-noise ratio SNR, a reference signal received power RSRP, a signal-to-interference-plus-noise ratio SINR, a reference signal received quality RSRQ, a layer 1 SNR, a layer 1 RSRP, a layer 1 SINR, and a layer 1 RSRQ;
a condition determined based on a bandwidth part BWP;
a condition determined based on a tracking area TA and/or a radio access network notification area RNA;
a condition determined based on an operating frequency;
a condition determined based on a public land mobile network PLMN;
a condition determined based on a terminal state;
a condition determined based on a quality of service flow QoS flow;
a condition determined based on a radio link failure RLF event;
a condition determined based on a radio resource management RRM event;
a condition determined based on a beam failure BF event and/or a beam failure recovery BFR event;
a condition determined based on a timing measurement result and/or a timing advance measurement result;
a condition determined based on a round-trip time RTT measurement result; and
a condition determined based on an observed time difference of arrival OTDOA measurement result.

14. The method according to claim 1, wherein the AI model parameter comprises at least one of the following:
structure information of an AI model; and
a parameter of each neuron in the AI model.

15. The method according to claim 1, wherein an AI model corresponding to the AI model parameter is used for at least one of the following:
signal processing;
signal transmission;
signal demodulation;
obtaining of channel state information;
beam management;
channel prediction;
interference suppression;
positioning;
prediction of a higher layer service and a higher layer parameter;
management of the higher layer service and the higher layer parameter; and
parsing of control signaling.

16. A parameter configuration method, comprising:
sending, by a network side device, first configuration information to a terminal, wherein
the first configuration information is for configuring AI model parameters in different conditions for the terminal.

17. The method according to claim 16, wherein the first configuration information is for indicating, configuring, or activating an AI model parameter corresponding to each condition;
or
the first configuration information is for indicating, configuring, or activating an AI model parameter set corresponding to each condition.

18. The method according to claim 16, wherein the sending first configuration information to a terminal comprises:
sending, by the network side device, the first configuration information to the terminal by using at least one of the following:
RRC signaling, a MAC CE, and DCI.

19. The method according to claim 17, wherein when the first configuration information is for indicating, configuring, or activating the AI model parameter set corresponding to each condition, the method further comprises:
sending, by the network side device, first indication information to the terminal, wherein
the first indication information is for indicating an AI model parameter, in the AI model parameter set, that corresponds to a current condition of the terminal;
or
the first indication information is for indicating the terminal to use at least one of the following when the condition is met: an AI model parameter used by default, an initially activated AI model parameter, and a preferentially used AI model parameter.

20. The method according to claim 16, wherein the method further comprises:
sending, by the network side device, second configuration information to the terminal, wherein
the second configuration information comprises an updated AI model parameter.

21. A parameter selection apparatus, comprising:
a determining module, configured to determine a first condition that a terminal meets; and
a parameter usage module, configured to use an AI model parameter corresponding to the first condition.

22. The apparatus according to claim 21, wherein the apparatus further comprises:
a first receiving module, configured to receive first configuration information from a network side device, wherein the first configuration information is for configuring AI model parameters in different conditions for the terminal, wherein
the parameter usage module is further configured to use, based on the first configuration information, the AI model parameter corresponding to the first condition.

23. The apparatus according to claim 22, wherein the first configuration information is for indicating, configuring, or activating an AI model parameter corresponding to each condition.

24. The apparatus according to claim 22, wherein the first configuration information is for indicating, configuring, or activating an AI model parameter set corresponding to each condition.

25. The apparatus according to claim 24, wherein
the first receiving module is further configured to receive first indication information from the network side device; and
the parameter usage module is further configured to use, based on the first configuration information and the first indication information, the AI model parameter corresponding to the first condition, wherein
the first indication information is for indicating the AI model parameter, in the AI model parameter set, that corresponds to the first condition;
or
the first indication information is for indicating the terminal to use at least one of the following when the condition is met: an AI model parameter used by default, an initially activated AI model parameter, and a preferentially used AI model parameter.

26. The apparatus according to claim 24, wherein
the parameter usage module is further configured to use, based on the first configuration information and a protocol agreement, the AI model parameter corresponding to the first condition, wherein
the protocol agreement is that the terminal uses at least one of the following when the condition is met: an AI model parameter used by default, an initially activated AI model parameter, and a preferentially used AI model parameter.

27. The apparatus according to claim 21, wherein
the parameter usage module is further configured to use, according to a first preset rule, the AI model parameter corresponding to the first condition, wherein
the first preset rule comprises at least one of the following:
the AI model parameter of the terminal is used by default, initially activated, or preferentially used in each condition;
the terminal uses any AI model parameter; and
a common AI model parameter is used by default, initially activated, or preferentially used in each condition.

28. A parameter configuration apparatus, comprising:
a first sending module, configured to send first configuration information to a terminal, wherein
the first configuration information is for configuring AI model parameters in different conditions for the terminal.

29. The apparatus according to claim 28, wherein the first configuration information is for indicating, configuring, or activating an AI model parameter corresponding to each condition;
or
the first configuration information is for indicating, configuring, or activating an AI model parameter set corresponding to each condition.

30. A terminal, comprising a processor, a memory, and a program or instructions that is/are stored in the memory and that may be run on the processor, wherein when the program or the instructions is/are executed by the processor, steps of the parameter selection method according to any one of claims 1 to 15 are implemented.

31. A network side device, comprising a processor, a memory, and a program or instructions that is/are stored in the memory and that may be run on the processor, wherein when the program or the instructions is/are executed by the processor, steps of the parameter configuration method according to any one of claims 16 to 20 are implemented.

32. A readable storage medium, wherein the readable storage medium stores a program or instructions; and when the program or the instructions is/are executed by a processor, steps of the parameter selection method according to any one of claims 1 to 15 are implemented, or steps of the parameter configuration method according to any one of claims 16 to 20 are implemented.
